# FASCICULE DE BREVET EUROPEEN

(11) **EP 3 456 025 B1**
(45) Date de publication et mention de la délivrance du brevet: **17.11.2021**
(21) Numéro de dépôt: 17725676.5
(22) Date de dépôt: 27.04.2017
(51) Int. Cl.: H04W 12/06, H04L 29/06, H04W 12/72, H04W 12/75, H04L 29/08

(54) **TECHNIQUE D'AUTHENTIFICATION D'UN DISPOSITIF UTILISATEUR**
TECHNIK ZUR AUTHENTIFIZIERUNG EINER BENUTZERVORRICHTUNG
TECHNIQUE FOR AUTHENTICATING A USER DEVICE

(30) Priorité: 10.05.2016 FR 1654174
(43) Date de publication de la demande: 20.03.2019
(73) Titulaire: ORANGE, 92130 Issy-les-Moulineaux (FR)
(72) Inventeur: CONIL, Patrice, 31490 Leguevin (FR); TASSAIN, Thierry, 31200 Toulouse (FR)
(86) Numéro de dépôt international: PCT/FR2017/051000
(87) Numéro de publication internationale: WO 2017/194852

(56) Documents cités:
- US-A1- 2012 144 202
- US-A1- 2012 278 854
- US-A1- 2012 317 261

## Description

L'invention se rapporte au domaine général des télécommunications.

L'invention concerne plus particulièrement une technique d'authentification d'un dispositif utilisateur auprès d'un serveur mettant en œuvre une application.

De nombreuses applications requièrent une identification d'un utilisateur. Pour pouvoir se connecter à une application, un utilisateur doit par exemple renseigner un identifiant de connexion, comprenant un identifiant d'utilisateur et un mot de passe. L'identifiant de connexion permet à l'administrateur d'un service de gérer les droits d'accès d'un utilisateur associé à cet identifiant pour cette application. Ce type d'identification nécessite que l'utilisateur crée un compte sur le serveur mettant en œuvre l'application et mémorise un identifiant de connexion et un mot de passe.

Il est également courant de se baser sur un identifiant d'un abonnement auprès d'un opérateur, typiquement le MSISDN (pour « Mobile Station Integrated Services Digital Network Number »). Cet identifiant est le numéro connu du public d'identification de l'utilisateur dans le réseau de son opérateur. C'est cet identifiant, couramment appelé numéro de téléphone, qui doit être composé afin de joindre l'utilisateur ayant souscrit à un abonnement. Lorsqu'un dispositif utilisateur est connecté sur le réseau de son propre opérateur, il existe des mécanismes réseau qui permettent à une application proposée par cet opérateur d'obtenir cet identifiant de manière fiable. Ceci permet d'authentifier implicitement l'utilisateur.

Dans les autres cas, l'identifiant devrait être fourni de manière déclarative par l'utilisateur et il n'y a aucune garantie que l'identifiant fourni appartient bien à cet utilisateur. Il n'est ainsi pas possible d'authentifier un abonné d'un autre opérateur de façon implicite. Le document US 2012/144202 de l'art antérieur divulgue un système permettant d'authentifier un dispositif et une application cliente.

Un des buts de l'invention est de remédier à des insuffisances/inconvénients de l'état de la technique et/ou d'y apporter des améliorations.

Selon un premier aspect, l'invention a pour objet un procédé selon la revendication 1 d'authentification d'un dispositif utilisateur auprès d'un serveur mettant en œuvre une application, dit serveur applicatif. Ce procédé comprend :
- une obtention par le dispositif d'un identifiant, dit identifiant secondaire, permettant au dispositif de recevoir des notifications relatives à l'application :
- un envoi par le dispositif, identifié par un identifiant, dit identifiant principal, associé au dispositif par l'intermédiaire d'un module de sécurité, d'un message de signalisation comprenant l'identifiant secondaire ;
- une réception par ledit dispositif d'une notification relative à l'application adressée au dispositif identifié par l'identifiant secondaire, ladite notification comprenant l'identifiant principal et un authentifiant, et dont l'envoi a été commandé par le serveur applicatif ;
- un envoi par ledit dispositif au serveur applicatif d'une demande d'authentification, ladite demande comprenant l'identifiant principal et l'authentifiant reçus, ledit dispositif étant authentifié par le serveur applicatif au moyen dudit identifiant principal en association avec ledit identifiant secondaire.

Corrélativement, le procédé selon la revendication 6 d'authentification d'un dispositif utilisateur auprès d'un serveur mettant en œuvre une application, dit serveur applicatif, comprend :
- une obtention par le serveur applicatif d'une demande d'enregistrement dudit dispositif au moyen d'un identifiant principal et d'un identifiant secondaire, obtenus à partir d'un message de signalisation envoyé par le dispositif identifié par ledit identifiant principal, associé au dispositif par l'intermédiaire d'un module de sécurité, ledit message comprenant l'identifiant secondaire, obtenu par le dispositif pour recevoir des notifications relatives à l'application :
- une commande par le serveur applicatif d'un envoi d'une notification relative à l'application adressée au dispositif identifié par l'identifiant secondaire, ladite notification comprenant l'identifiant principal et un authentifiant attendu ;
- une réception par le serveur applicatif d'une demande d'authentification en provenance du dispositif, ladite demande comprenant l'identifiant principal et un authentifiant, ledit dispositif étant authentifié par le serveur applicatif au moyen dudit identifiant principal en association avec ledit identifiant secondaire lorsque l'authentifiant reçu correspond à l'authentifiant attendu.

Il est ainsi possible à l'application, aussi bien au niveau du dispositif utilisateur que du serveur applicatif, d'obtenir de manière fiable un identifiant de l'utilisateur sans nécessiter de manipulation de l'utilisateur. Cet identifiant de l'utilisateur, appelé identifiant principal, est celui qui est mémorisé dans un module de sécurité associé au dispositif utilisateur. Il est obtenu par le serveur applicatif au moyen d'un message de signalisation, qui comprend cet identifiant en tant qu'adresse d'origine du message. Le parcours client est très simplifié et sécurisé. L'utilisateur n'a pas besoin de créer un compte auprès de l'opérateur mettant en œuvre l'application. Il n'a pas besoin de mémoriser un identifiant de connexion et un mot de passe pour cette application. De plus, l'identifiant secondaire permet à l'application de pousser des informations au moyen de notifications à destination du dispositif utilisateur (mode « push » en anglais). Ces notifications sont par exemple poussées par un serveur de notification. Il est ainsi possible de réaliser une authentification implicite même lorsque l'utilisateur du dispositif utilisateur n'a pas souscrit d'abonnement auprès de l'opérateur proposant l'application. Cette technique trouve une application particulièrement intéressante pour l'authentification d'objets connectés.

Les différents modes ou caractéristiques de réalisation mentionnés ci-après peuvent être ajoutés indépendamment ou en combinaison les uns avec les autres, au procédé d'authentification tel que défini précédemment.

Selon une caractéristique particulière du procédé d'authentification, l'identifiant secondaire compris dans le message de signalisation est chiffré par le dispositif au moyen d'une clé partagée avec le serveur applicatif. Corrélativement, l'identifiant secondaire compris dans le message de signalisation est déchiffré par le serveur applicatif au moyen d'une clé partagée avec le dispositif.

Le chiffrement de l'identifiant secondaire permet de garantir au serveur applicatif que le dispositif utilisateur dispose bien de la clé partagée par le dispositif utilisateur et le serveur applicatif, et ainsi exécute bien l'application.

Dans un mode de réalisation particulier du procédé d'authentification, l'identifiant principal et l'authentifiant compris dans la notification sont déchiffrés par le dispositif au moyen d'une clé partagée avec le serveur applicatif. Corrélativement, l'identifiant principal et l'authentifiant compris dans la notification sont chiffrés par le serveur applicatif au moyen d'une clé partagée avec le dispositif.

Un équipement servant d'intermédiaire entre le serveur applicatif et le dispositif utilisateur s'il intercepte la notification ne peut décoder les informations qu'elle contient, notamment l'identifiant principal et l'authentifiant. Un autre dispositif utilisateur n'a pas de possibilité de se faire passer pour le dispositif ayant demandé à s'enregistrer.

Dans un mode de réalisation particulier du procédé d'authentification, la clé est déterminée par le dispositif à partir d'une adresse de contact associée à l'application et d'un identifiant de l'application. Cette clé peut également être déterminée par le serveur applicatif à partir d'une adresse de contact associée à l'application et d'un identifiant de l'application.

Ceci permet de garantir que le dispositif utilisateur dispose bien de l'identifiant de l'application et de l'algorithme de génération de la clé partagée.

Dans un mode de réalisation particulier du procédé d'authentification, le dispositif requiert l'identifiant secondaire en fournissant un identifiant de l'application.

La fourniture de l'identifiant de l'application permet ensuite au serveur applicatif de commander l'envoi de la notification à destination du dispositif utilisateur.

Selon un deuxième aspect, l'invention concerne également un dispositif utilisateur selon la revendication 10 comprenant :
- un module de communication avec un serveur de notification, agencé pour obtenir un identifiant, dit identifiant secondaire, et pour recevoir des notifications relatives à l'application adressées au dispositif identifié par l'identifiant secondaire :
- un module de signalisation, agencé pour envoyer un message de signalisation comprenant un identifiant secondaire et d'adresse origine un identifiant, dit identifiant principal, associé au dispositif par l'intermédiaire d'un module de sécurité ;
- un module d'authentification, agencé pour extraire d'une notification relative à l'application reçue l'identifiant principal et un authentifiant et pour envoyer à un serveur applicatif une demande d'authentification, ladite demande comprenant l'identifiant principal et l'authentifiant reçus, ledit dispositif étant authentifié par le serveur applicatif au moyen dudit identifiant principal en association avec ledit identifiant secondaire.

Ce dispositif utilisateur peut bien sûr comporter en termes structurels les différentes caractéristiques relatives au procédé d'authentification tel que décrit précédemment, qui peuvent être combinées ou prises isolément. Ainsi, les avantages énoncés pour le procédé d'authentification selon le premier aspect sont transposables directement au dispositif utilisateur. Par conséquent, ils ne sont pas détaillés plus amplement.

Selon un troisième aspect, l'invention concerne également un serveur selon la revendication 11 mettant en œuvre une application, dit serveur applicatif. Ce serveur comprend :
- un module d'authentification, agencé pour obtenir une demande d'enregistrement d'un dispositif utilisateur au moyen d'un identifiant principal et d'un identifiant secondaire, obtenus à partir d'un message de signalisation envoyé par le dispositif identifié par ledit identifiant principal, associé au dispositif par l'intermédiaire d'un module de sécurité, ledit message comprenant l'identifiant secondaire, obtenu par le dispositif pour recevoir des notifications relatives à l'application, et pour générer un authentifiant pour ledit dispositif :
- un module de commande, agencé pour commander un envoi d'une notification relative à l'application, adressée au dispositif identifié par l'identifiant secondaire, ladite notification comprenant l'identifiant principal et un authentifiant attendu ;
ledit module d'authentification étant en outre agencé pour recevoir en provenance du dispositif ayant demandé à être enregistré une demande d'authentification, ladite demande comprenant l'identifiant principal et un authentifiant, ledit dispositif étant authentifié par le serveur applicatif au moyen dudit identifiant principal en association avec ledit identifiant secondaire lorsque l'authentifiant reçu correspond à l'authentifiant attendu.

Ce serveur applicatif peut bien sûr comporter en termes structurels les différentes caractéristiques relatives au procédé d'authentification tel que décrit précédemment, qui peuvent être combinées ou prises isolément. Ainsi, les avantages énoncés pour le procédé d'authentification selon le premier aspect sont transposables directement au serveur applicatif. Par conséquent, ils ne sont pas détaillés plus amplement.

Selon un quatrième aspect, l'invention concerne un programme selon la revendication 12 pour un dispositif utilisateur, comprenant des instructions de code de programme destinées à commander l'exécution de celles des étapes du procédé d'authentification précédemment décrit mises en œuvre par le dispositif utilisateur, lorsque ce programme est exécuté par ce dispositif et un support d'enregistrement selon la revendication 13 lisible par un dispositif sur lequel est enregistré un programme pour un dispositif.

Les avantages énoncés pour le procédé d'authentification selon le premier aspect sont transposables directement au programme pour un dispositif utilisateur et au support d'enregistrement.

Selon un cinquième aspect, l'invention concerne un programme selon la revendication 14 pour un serveur applicatif, comprenant des instructions de code de programme destinées à commander l'exécution de celles des étapes du procédé d'authentification précédemment décrit mises en œuvre par le serveur applicatif, lorsque ce programme est exécuté par ce serveur et un support d'enregistrement selon la revendication 15 lisible par une entité de confiance sur lequel est enregistré un programme pour un serveur.

Les avantages énoncés pour le procédé d'authentification selon le premier aspect sont transposables directement au programme pour un serveur et au support d'enregistrement.

La technique d'authentification d'un dispositif utilisateur sera mieux comprise à l'aide de la description suivante de modes de réalisation particuliers, en référence aux dessins annexés sur lesquels :
- la figure 1 représente un environnement dans lequel est mis en œuvre le procédé d'authentification d'un dispositif utilisateur dans un mode de réalisation particulier ;
- la figure 2 illustre des étapes d'un procédé d'authentification mises en œuvre par un dispositif utilisateur et un serveur applicatif selon un mode particulier de réalisation ;
- la figure 3 représente un dispositif utilisateur selon un mode particulier de réalisation ;
- la figure 4 représente un serveur applicatif selon un mode particulier de réalisation.

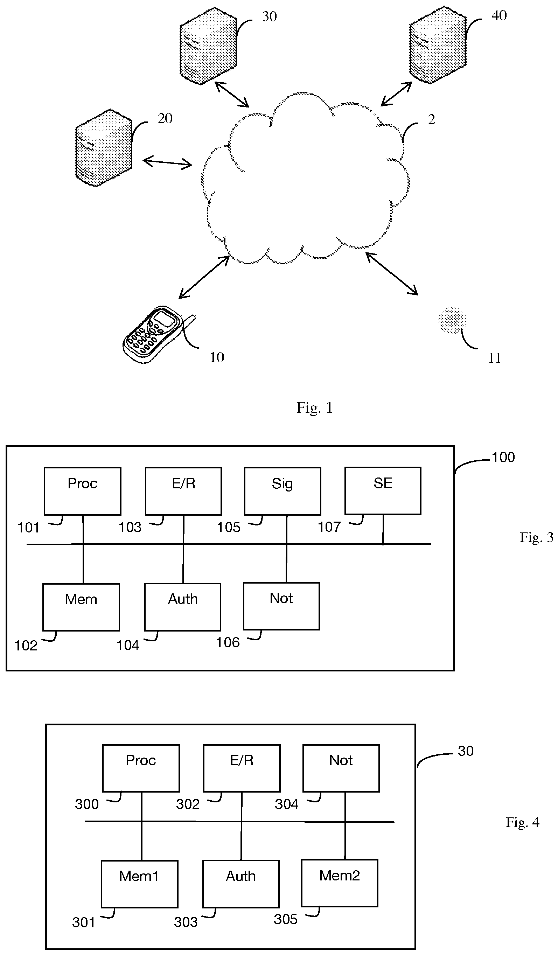

La **figure 1** représente un environnement dans lequel est mis en œuvre le procédé d'authentification d'un dispositif utilisateur auprès d'un serveur mettant en œuvre une application dans un mode de réalisation particulier.

Sur la figure 1 sont représentés deux dispositifs utilisateur 10, 11 accédant à une application par l'intermédiaire d'un réseau de communication 2. Le premier dispositif utilisateur 10 est un terminal mobile connecté au réseau de communication 2 par l'intermédiaire d'un réseau d'accès sans fil, tel qu'un réseau mobile GSM, UMTS, LTE, ... Ce premier dispositif utilisateur 10 est équipé d'un module de sécurité, associé à un abonnement auquel son utilisateur a souscrit auprès d'un premier opérateur de réseau. Le deuxième dispositif utilisateur 11 est un objet connecté accédant au réseau de communication 2 par l'intermédiaire d'un réseau d'accès sans fil, tel qu'un réseau mobile GSM, UMTS, LTE, .... Ce deuxième dispositif utilisateur 11 est également équipé d'un module de sécurité, associé à un abonnement auquel son utilisateur a souscrit auprès d'un deuxième opérateur de réseau. Aucune limitation n'est attachée au nombre de dispositifs utilisateur, ni au nombre d'opérateurs de réseau. A titre illustratif, on a choisi un exemple dans lequel à chaque dispositif utilisateur est associé un opérateur de réseau distinct. Toutefois, aucune limitation n'est attachée à cet exemple. Les utilisateurs des deux dispositifs peuvent notamment avoir souscrit un abonnement auprès d'un même opérateur de réseau.

L'identifiant d'utilisateur ou identifiant principal Id_P correspond par exemple à un identifiant d'un abonnement auprès d'un opérateur, typiquement le MSISDN (pour « Mobile Station Integrated Services Digital Network Number »). Cet identifiant est le numéro connu du public d'identification de l'utilisateur dans le réseau de son opérateur. C'est cet identifiant, couramment appelé numéro de téléphone, qui doit être composé afin de joindre l'utilisateur ayant souscrit à un abonnement. Cet identifiant principal est associé au dispositif par l'intermédiaire d'un module de sécurité. Le module de sécurité peut correspondre à une carte à puce amovible de type USIM, UICC, ou bien un module logiciel sécurisé s'exécutant dans une zone mémoire sécurisée du dispositif utilisateur, ou bien encore hébergé sur un équipement du réseau. Aucune limitation n'est attachée à ce module de sécurité.

Le réseau de communication 2 permet notamment d'accéder à un serveur 30 mettant en œuvre une application, dit serveur applicatif. L'application requiert une identification de l'utilisateur. L'application est par exemple un service accessible sur la toile d'araignée mondiale WWW (pour « World Wide Web »), communément appelée le Web ou la Toile, via des échanges hypertexte.

Un serveur de notification 40 est également connecté au réseau de communication 2. Un tel serveur de notification permet d'envoyer des notifications relatives à une application à un ou des dispositifs utilisateur ayant souscrit à ce service de notification. Chaque dispositif utilisateur a obtenu un identifiant de notification, appelé par la suite identifiant secondaire et noté Id_S. Les notifications sont transmises en mode poussé (mode « push » en anglais), c'est-à-dire sans sollicitation explicite du dispositif utilisateur. Ce serveur de notification est par exemple un serveur GCM (pour « Google Cloud Messaging ») proposé par la société Google, un serveur APNS (pour « Apple Push Notification Service ») proposé par la société Apple ou bien encore un serveur WNS (pour « Windows push Notification Service ») proposé par la société Microsoft.

Un serveur de médiation 20 est également connecté au réseau de communication 2. Ce serveur de médiation 20 est notamment agencé pour recevoir un message de signalisation ayant pour origine un dispositif identifié par un identifiant principal Id_P et comprenant un identifiant secondaire Id_S, pour extraire l'identifiant principal de l'entête de ce message de signalisation et l'identifiant secondaire de la charge utile (« payload » en anglais) et pour envoyer au serveur applicatif 30 une demande d'enregistrement du dispositif utilisateur 10, 11, cette demande comprenant les deux identifiants, principal et secondaire, extraits. Le message de signalisation est un message court SMS (pour « Short Message Service »), tel que défini pour les réseaux de communication mobiles conformes à la norme 3GPP. On se place ici dans le cas où le serveur applicatif 30 et le serveur de médiation 20 sont distincts. Aucune limitation n'est attachée à ce mode de réalisation. Il est en effet possible de prévoir un unique serveur jouant les rôles du serveur de médiation 20 et du serveur applicatif 30. Dans un autre mode de réalisation, le message de signalisation est un message USSD (pour « Unstructured Supplementary Service Data »). L'application dans ce cas doit obtenir une autorisation pour envoyer un tel message de signalisation.

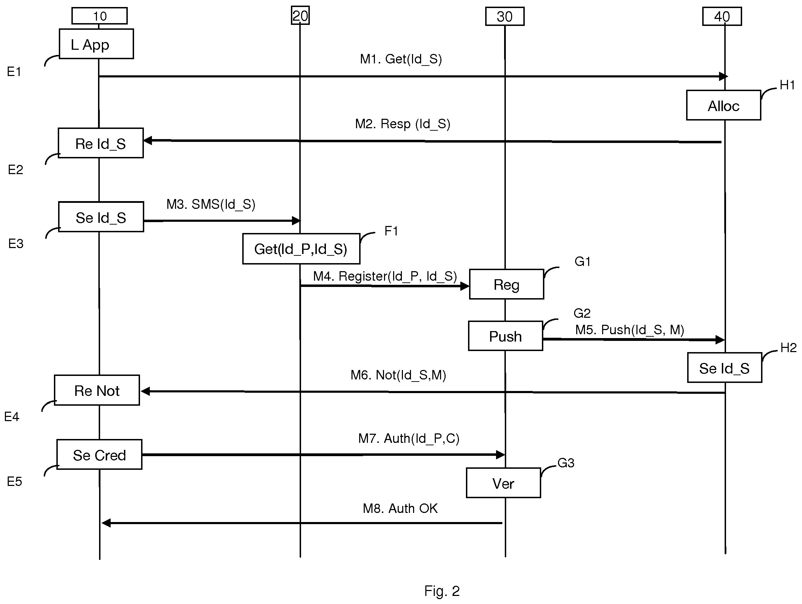

La **figure 2** illustre des étapes d'un procédé d'authentification d'un dispositif utilisateur 10 auprès d'un serveur mettant en œuvre une application, dit serveur applicatif 30 selon un mode particulier de réalisation.

L'utilisateur demande par l'intermédiaire d'une interface homme-machine du dispositif utilisateur 10 un démarrage de l'application fournie par le serveur 30. Plus précisément, cette demande de démarrage s'effectue par l'intermédiaire d'un icône qui s'affiche sur un écran et avec lequel l'utilisateur peut interagir. Dans un mode de réalisation particulier, par exemple pour le dispositif utilisateur 11, l'utilisateur interagit avec un bouton pour démarrer l'application.

Dans une étape d'envoi E1, le dispositif utilisateur 10 (plus précisément l'application s'exécutant sur le dispositif) envoie une demande M1 au serveur de notification 40 afin d'obtenir en retour un identifiant secondaire Id_S pour l'application identifiée par l'identifiant d'application Id_A. Les échanges entre le dispositif utilisateur 10 et le serveur 40 s'effectuent conformément à un protocole propre au serveur de publication. Grâce à cet identifiant secondaire, le dispositif utilisateur 10 peut recevoir ensuite des notifications relatives à l'application en provenance du serveur de notification 40. Dans une étape H1, une fois cette demande M1 reçue, le serveur de notification 40 alloue un identifiant secondaire Id_S au dispositif utilisateur 10, le mémorise en association avec l'identifiant d'application Id_A et le transmet en retour au dispositif utilisateur 10 dans un message M2.

Dans une étape de réception E2, le dispositif utilisateur 10 obtient l'identifiant secondaire alloué Id_S pour cette application. Plus précisément, le dispositif utilisateur 10 le reçoit dans le message M2. Ces étapes E1 et E2 peuvent avoir été exécutées le cas échéant lors d'une première exécution de l'application et l'identifiant secondaire mémorisé par le dispositif utilisateur 10 à cette occasion. Dans ce cas, l'étape E2 consiste à obtenir l'identifiant secondaire par lecture en mémoire.

Dans une étape E3, le dispositif utilisateur 10 envoie un message de signalisation M3 comprenant l'identifiant secondaire Id_S. Dans ce mode de réalisation, le message de signalisation correspond à un message court SMS (pour « Short Message Service ») adressé à une adresse de contact associée à l'application. Pour envoyer ce message de signalisation, le dispositif utilisateur 10 est identifié par son identifiant principal Id_P, associé au dispositif par l'intermédiaire du module de sécurité 107. On rappelle ici que l'identifiant principal Id_P correspond au numéro MSISDN associé à l'utilisateur. Ainsi, le message de signalisation M3 comprend dans une entête l'identifiant principal Id_P en tant qu'adresse d'origine du message. Il est ici souligné que l'application ne renseigne pas elle-même cette adresse d'origine et n'en a pas connaissance lors de l'exécution de cette étape. Ceci est effectué par un module de signalisation 105 qui renseigne l'adresse d'origine de tous les messages de signalisation qu'il envoie avec l'identifiant principal Id_P. L'identifiant secondaire Id_S est quant à lui porté par la charge utile (ou « payload » en anglais) du message M3. L'adresse de contact pour l'application permet d'acheminer le message de signalisation M3 au serveur de médiation 20.

Dans une étape F1, le serveur de médiation 20 reçoit le message de signalisation M3, extrait l'identifiant principal Id_S de l'entête et l'identifiant secondaire Id_S de la charge utile. Toujours dans cette étape F1, le serveur de médiation 20 transmet une demande d'enregistrement M4 du dispositif utilisateur 10 au serveur applicatif 30. Cette demande d'enregistrement M4 comprend notamment l'identifiant principal Id_P et l'identifiant secondaire Id_S, qui ont été obtenus à partir du message de signalisation M3 envoyé par le dispositif utilisateur 10 identifié par son identifiant principal Id_P.

Le serveur applicatif 30 reçoit la demande d'enregistrement M4 dans une étape G1 et mémorise dans une zone mémoire 305 l'identifiant principal Id_P en association avec l'identifiant secondaire Id_S. Toujours dans cette étape G1, le serveur applicatif 30 génère par exemple de manière aléatoire un authentifiant C (également appelé « credential » en anglais). Un état associé au dispositif utilisateur 10 est « en attente d'authentification ». Dans une étape G2, le serveur applicatif 30 commande par un message M5 au serveur de notification 40 un envoi d'une notification M relative à l'application adressée au dispositif identifié par l'identifiant secondaire Id_S. Cette notification M comprend l'identifiant principal Id_P et l'authentifiant attendu C.

Dans une étape H2, le serveur de notification 40 reçoit la commande M5 et pousse la notification M relative à l'application vers le dispositif utilisateur 10 identifié par l'identifiant secondaire Id_S (message M6).

Dans une étape E4, le dispositif utilisateur 10 reçoit la notification M (message M6) et extrait de cette notification M l'identifiant principal Id_P et l'authentifiant C. L'application s'exécutant sur le dispositif utilisateur 10 obtient ainsi l'identifiant principal Id_P pour une utilisation ultérieure le cas échéant. On souligne ici que, pour les dispositifs utilisateur disponibles à ce jour, il n'est pas possible pour l'application d'obtenir cet identifiant principal, aucune interface de programmation applicative API (pour « Application Programming Interface ») n'étant définie.

Dans une étape E5, le dispositif utilisateur 10 (plus précisément l'application s'exécutant sur celui-ci) envoie au serveur applicatif 30 une demande d'authentification M7. Cette demande d'authentification M7 comprend notamment l'identifiant principal Id_P et l'authentifiant C.

Dans une étape G3, le serveur applicatif 30 vérifie que l'authentifiant C correspond bien à l'authentifiant attendu pour cet identifiant principal Id_P. Si tel est le cas, l'état associé au dispositif utilisateur 10 devient « authentifié » et le serveur applicatif 30 renvoie un message M8 au dispositif utilisateur 10 confirmant le succès de l'authentification. Si tel n'est pas le cas (non représenté sur la figure 2), c'est-à-dire si l'authentifiant reçu ne correspond pas à l'authentifiant attendu pour cet identifiant principal Id_P, le serveur applicatif 30 renvoie un message au dispositif utilisateur indiquant l'échec de l'authentification. On constate ainsi, en cas de succès, que l'application a obtenu, aussi bien au niveau du dispositif utilisateur que du serveur applicatif, l'identifiant principal Id_P de manière fiable. Le dispositif utilisateur a pu s'authentifier auprès du serveur applicatif de manière simple et sécurisée. On constate également que du point de vue de l'utilisateur, le parcours pour exécuter l'application est très simple à mettre en œuvre. Il lui suffit de démarrer l'exécution de l'application. Ainsi, l'utilisateur ne doit pas mémoriser de mot de passe. L'accès s'effectue au moyen d'un dispositif utilisateur authentifié par son opérateur de réseau. Il n'y a pas d'ambigüité sur l'identité de l'utilisateur. Le dispositif utilisateur joue ainsi un rôle d'élément de sécurité (ou « Secure Element » en anglais) et apporte une sécurisation du procédé d'authentification pour une exécution de l'application. L'identifiant secondaire Id_S permet en outre à l'application de transmettre ultérieurement des notifications à destination du dispositif utilisateur de manière simple.

La description du procédé d'authentification a été faite en se plaçant au niveau du dispositif utilisateur 10. Ce procédé est bien entendu également applicable pour une mise en œuvre par le dispositif utilisateur 11. On rappelle ici que ce dispositif utilisateur 11 est un objet connecté, pour lequel l'utilisateur a souscrit un abonnement auprès d'un deuxième opérateur différent de celui (premier opérateur) qui met en œuvre le serveur applicatif 30. On constate que pour ce dispositif 11, l'authentification s'effectue implicitement, bien que ce dispositif ne soit pas connu du premier opérateur. L'utilisateur de ce dispositif 11 ne doit pas créer un compte auprès du premier opérateur avant de pouvoir exécuter l'application.

Dans les différentes variantes, décrites ci-après, une clé de chiffrement est partagée par le dispositif utilisateur 10 avec le serveur applicatif 30. Dans un premier cas, le chiffrement est symétrique et la clé partagée correspond à la clé de chiffrement. Dans un deuxième cas, le chiffrement est asymétrique. Un des deux équipements (dispositif utilisateur ou serveur applicatif) dispose de la clé publique associée à la clé privée du deuxième équipement.

Dans une première variante de réalisation, à l'étape E3, l'identifiant secondaire compris dans le message de signalisation est chiffré par le dispositif utilisateur 10 au moyen de la clé partagée (clé secrète dans le cas du chiffrement symétrique, clé publique du serveur applicatif dans le cas du chiffrement asymétrique). Le serveur de médiation 20 extrait alors l'identifiant secondaire Id_S chiffré et le transmet au serveur applicatif 30, qui le déchiffre alors à l'étape G1 au moyen de la clé partagée (clé secrète dans le cas du chiffrement symétrique, clé privée du serveur applicatif dans le cas du chiffrement asymétrique). Ceci permet de garantir au serveur applicatif 30 que l'identifiant secondaire a bien été transmis par l'application s'exécutant sur le dispositif utilisateur 10.

Dans une deuxième variante de réalisation, à l'étape G1, la notification M est chiffrée par le serveur applicatif 30 au moyen de la clé partagée (clé secrète dans le cas du chiffrement symétrique, clé publique du dispositif utilisateur dans le cas du chiffrement asymétrique). Le dispositif utilisateur 10 déchiffre alors à l'étape E4 la notification M reçue au moyen de la clé partagée (clé secrète dans le cas du chiffrement symétrique, clé privée du dispositif utilisateur dans le cas du chiffrement asymétrique). Ceci permet de garantir au dispositif utilisateur 10 que la notification a bien été préparée par le serveur applicatif 30.

Une troisième variante cumule les deux variantes précédentes. Plus précisément, le contenu du message de signalisation M3 et la notification M sont transmis de manière chiffrée. Cette troisième variante présente les avantages des deux variantes précédentes.

Dans le cas d'un chiffrement symétrique, dans un mode de réalisation particulier, la clé est déterminée par le dispositif utilisateur à partir de l'adresse de contact associée à l'application et d'un identifiant de l'application. On rappelle ici que l'adresse de contact associée à l'application correspond à l'adresse utilisée en tant qu'adresse de destination du message de signalisation M3 lors de l'étape E3. Plus précisément, la clé est déterminée en appliquant une fonction de hachage cryptographique, par exemple la fonction SHA-1 (pour « Secure Hash Algorithm »), de l'adresse de contact par l'identifiant d'application (ou inversement). Aucune limitation n'est attachée à cette fonction permettant de déterminer la clé, du moment que la fonction et ses paramètres sont connus aussi bien du dispositif utilisateur que du serveur applicatif.

Dans un mode de réalisation particulier, le dispositif utilisateur 10 fournit dans le message M1 un identifiant de l'application Id_A. Ceci permet au serveur de notification 40 d'identifier l'application qui va ensuite transmettre des notifications à destination du dispositif utilisateur.

La **figure 3** représente un dispositif utilisateur 100 dans un mode particulier de réalisation. Le dispositif utilisateur 100 comprend notamment :
- un processeur 101 pour exécuter des instructions de code de modules logiciels ;
- une zone mémoire 102, agencée pour mémoriser une application qui comprend des instructions de code pour mettre en œuvre les étapes du procédé d'authentification ;
- une mémoire de stockage, non représentée, agencée pour stocker des données utilisées lors de la mise en œuvre du procédé d'authentification ;
- un module d'interface 103 avec un réseau de communication, agencé pour émettre et recevoir des données ;
- un module d'authentification 104, agencé pour exécuter une phase d'authentification lors du démarrage de l'application ;
- un module de signalisation 105, agencé pour envoyer un message de signalisation d'adresse origine un identifiant, dit identifiant principal, associé au dispositif par l'intermédiaire d'un module de sécurité 107 ;
- un module de communication 106 avec un serveur de notification 40, agencé pour obtenir un identifiant, dit identifiant secondaire, et pour recevoir des notifications relatives à l'application en étant adressé par l'identifiant secondaire ;
- le module de sécurité 107, agencé pour mémoriser un identifiant principal Id_P.

Le module d'authentification 104 est notamment agencé pour :
- commander un envoi par le module de signalisation 105 d'un message de signalisation comprenant un identifiant secondaire ;
- extraire d'une notification relative à l'application reçue par le module de communication 106 l'identifiant principal et un authentifiant ;
- envoyer à un serveur applicatif 30 une demande d'authentification, ladite demande comprenant l'identifiant principal et l'authentifiant reçus, ledit dispositif étant authentifié par le serveur applicatif au moyen dudit identifiant principal en association avec ledit identifiant secondaire.

Le module de signalisation 105 correspond dans un mode de réalisation particulier à un module d'envoi et de réception de messages courts.

Dans un mode de réalisation particulier, le dispositif utilisateur 100 comprend également un module de chiffrement. Le module d'authentification 104 demande au module de chiffrement de chiffrer l'identifiant secondaire au moyen d'une clé partagée avec le serveur applicatif et commande ensuite l'envoi de cet identifiant chiffré.

Dans un mode de réalisation particulier, le dispositif utilisateur 100 comprend également un module de déchiffrement. Le module d'authentification 104 demande au module de déchiffrement de déchiffrer l'identifiant principal et l'authentifiant compris dans une notification reçue au moyen d'une clé partagée avec le serveur applicatif.

Dans un autre mode de réalisation particulier, le dispositif utilisateur 100 comprend un module de chiffrement/déchiffrement. Les fonctions de ce module cumulent celles des modules correspondants dans les deux modes de réalisation précédemment décrits.

Dans un mode de réalisation particulier, la clé de chiffrement et/ou de déchiffrement est déterminée par le module d'authentification 104 à partir d'une adresse de contact associée à l'application et d'un identifiant de l'application.

Dans un mode de réalisation particulier, le module de communication 106 est agencé pour requérir l'identifiant secondaire en fournissant un identifiant de l'application.

Il est ici souligné que le dispositif utilisateur 100 comprend également d'autres modules de traitement, non représentés sur la figure 3, agencés pour mettre en œuvre les différentes fonctions de dispositif utilisateur.

La **figure 4** représente un serveur 30 mettant en œuvre une application dans un mode particulier de réalisation. Le serveur, dit serveur applicatif, comprend notamment :
- un processeur 300 pour exécuter des instructions de code de modules logiciels ;
- une première zone mémoire 301, agencée pour mémoriser une application qui comprend des instructions de code pour mettre en œuvre les étapes du procédé d'authentification ;
- une mémoire de stockage, non représentée, agencée pour stocker des données utilisées lors de la mise en œuvre du procédé d'authentification ;
- un module d'interface 302 avec un réseau de communication, agencé pour émettre et recevoir des données ;
- un module d'authentification 303 ;
- un module de commande 304, agencé pour commander un envoi d'une notification relative à l'application, adressée au dispositif identifié par l'identifiant secondaire, ladite notification comprenant l'identifiant principal et un authentifiant attendu ;
- une deuxième zone mémoire 305, agencée pour mémoriser, pour un identifiant principal, un identifiant secondaire.

Le module d'authentification 303 est notamment agencé pour :
- obtenir une demande d'enregistrement d'un dispositif utilisateur 10, 11 au moyen d'un identifiant principal et d'un identifiant secondaire, obtenus à partir d'un message de signalisation envoyé par le dispositif identifié par ledit identifiant principal, associé au dispositif par l'intermédiaire d'un module de sécurité, ledit message comprenant l'identifiant secondaire, obtenu par le dispositif pour recevoir des notifications relatives à l'application,
- générer un authentifiant pour ledit dispositif,
- recevoir en provenance du dispositif ayant demandé à être enregistré une demande d'authentification, ladite demande comprenant l'identifiant principal et un authentifiant ;
- authentifier le dispositif au moyen dudit identifiant principal en association avec ledit identifiant secondaire lorsque l'authentifiant reçu correspond à l'authentifiant attendu.

Dans un mode de réalisation particulier, le serveur applicatif 30 comprend également un module de signalisation agencé pour recevoir un message de signalisation envoyé par le dispositif identifié par un identifiant principal, associé au dispositif par l'intermédiaire d'un module de sécurité, ce message comprenant l'identifiant secondaire, obtenu par le dispositif pour recevoir des notifications relatives à l'application.

Il est ici souligné que le serveur applicatif 30 comprend également d'autres modules de traitement, non représentés sur la figure 4, agencés pour mettre en œuvre les différentes fonctions de serveur.

Aucune limitation n'est attachée à ces différents modes de réalisation et l'homme du métier est à même d'en définir d'autres en combinant une obtention d'un identifiant secondaire pour recevoir des notifications relatives à une application et une émission d'un message de signalisation permettant à un serveur mettant en œuvre l'application d'obtenir un identifiant principal.

La technique d'authentification est mise en œuvre au moyen de composants logiciels et/ou matériels. Dans cette optique, le terme "module" peut correspondre dans ce document aussi bien à un composant logiciel, qu'à un composant matériel ou à un ensemble de composants matériels et/ou logiciels, apte à mettre en œuvre une fonction ou un ensemble de fonctions, selon ce qui est décrit précédemment pour le module concerné.

Un composant logiciel correspond à un ou plusieurs programmes d'ordinateur, un ou plusieurs sous-programmes d'un programme, ou de manière plus générale à tout élément d'un programme ou d'un logiciel. Un tel composant logiciel est stocké en mémoire puis chargé et exécuté par un processeur de données d'une entité physique et est susceptible d'accéder aux ressources matérielles de cette entité physique (mémoires, supports d'enregistrement, bus de communication, cartes électroniques d'entrées/sorties, interfaces utilisateur, etc).

De la même manière, un composant matériel correspond à tout élément d'un ensemble matériel (ou hardware). Il peut s'agir d'un composant matériel programmable ou non, avec ou sans processeur intégré pour l'exécution de logiciel. Il s'agit par exemple d'un circuit intégré, d'une carte à puce, d'une carte électronique pour l'exécution d'un micrologiciel (firmware), etc.

Dans un mode de réalisation particulier, les modules 104, 106 sont agencés pour mettre en œuvre le procédé d'authentification précédemment décrit. Il s'agit de préférence de modules logiciels comprenant des instructions logicielles pour faire exécuter celles des étapes du procédé d'authentification précédemment décrit, mises en œuvre par un dispositif utilisateur. L'invention concerne donc aussi :
- un programme pour un dispositif utilisateur, comprenant des instructions de code de programme destinées à commander l'exécution des étapes du procédé d'authentification précédemment décrit, lorsque ledit programme est exécuté par ce dispositif utilisateur ;
- un support d'enregistrement lisible par un dispositif utilisateur sur lequel est enregistré le programme pour un dispositif.

Dans un mode de réalisation particulier, les modules 303, 304 sont agencés pour mettre en œuvre le procédé d'authentification précédemment décrit. Il s'agit de préférence de modules logiciels comprenant des instructions logicielles pour faire exécuter celles des étapes du procédé d'authentification précédemment décrit, mises en œuvre par un serveur mettant en œuvre une application. L'invention concerne donc aussi :
- un programme pour un serveur applicatif, comprenant des instructions de code de programme destinées à commander l'exécution des étapes du procédé d'authentification précédemment décrit, lorsque ledit programme est exécuté par ce serveur applicatif ;
- un support d'enregistrement lisible par un serveur applicatif sur lequel est enregistré le programme pour un serveur.

Les modules logiciels peuvent être stockés dans ou transmis par un support de données. Celui-ci peut être un support matériel de stockage, par exemple un CD-ROM, une disquette magnétique ou un disque dur, ou bien un support de transmission tel qu'un signal électrique, optique ou radio, ou un réseau de télécommunication.

## Revendications

1. Procédé d'authentification d'un dispositif utilisateur (10, 11) auprès d'un serveur mettant en œuvre une application, dit serveur applicatif (30), ledit procédé comprenant :
- une obtention (E2) par le dispositif d'un identifiant, dit identifiant secondaire, permettant au dispositif de recevoir des notifications relatives à l'application :
- un envoi (E3) par le dispositif, identifié par un identifiant, dit identifiant principal, associé au dispositif par l'intermédiaire d'un module de sécurité, d'un message de signalisation comprenant l'identifiant principal dans un entête du message en tant qu'adresse origine du message et l'identifiant secondaire porté par une charge utile du message ;
- une réception (E4) par ledit dispositif d'une notification relative à l'application adressée au dispositif identifié par l'identifiant secondaire en mode poussé, ladite notification comprenant l'identifiant principal et un authentifiant, et dont l'envoi a été commandé par le serveur applicatif ;
- un envoi (E5) par ledit dispositif au serveur applicatif d'une demande d'authentification, ladite demande comprenant l'identifiant principal et l'authentifiant extraits de la notification, ledit dispositif étant authentifié par le serveur applicatif au moyen dudit identifiant principal en association avec ledit identifiant secondaire.

2. Procédé d'authentification selon la revendication 1, dans lequel l'identifiant secondaire compris dans le message de signalisation est chiffré au moyen d'une clé partagée avec le serveur applicatif.

3. Procédé d'authentification selon la revendication 1, dans lequel l'identifiant principal et l'authentifiant compris dans la notification sont déchiffrés au moyen d'une clé partagée avec le serveur applicatif.

4. Procédé d'authentification selon la revendication 2 ou 3, dans lequel la clé est déterminée par le dispositif à partir d'une adresse de contact associée à l'application et d'un identifiant de l'application.

5. Procédé d'authentification selon la revendication 1, dans lequel le dispositif requiert l'identifiant secondaire en fournissant un identifiant de l'application.

6. Procédé d'authentification d'un dispositif utilisateur (10, 11) auprès d'un serveur mettant en œuvre une application, dit serveur applicatif (30), ledit procédé comprenant :
- une obtention (G1) par le serveur applicatif d'une demande d'enregistrement dudit dispositif au moyen d'un identifiant principal et d'un identifiant secondaire, obtenus à partir d'un message de signalisation envoyé par le dispositif identifié par ledit identifiant principal, associé au dispositif par l'intermédiaire d'un module de sécurité, ledit message comprenant l'identifiant principal dans un entête du message en tant qu'adresse origine du message et l'identifiant secondaire porté par une charge utile du message, obtenu par le dispositif pour recevoir des notifications relatives à l'application :
- une commande (G2) par le serveur applicatif d'un envoi en mode poussé d'une notification relative à l'application adressée au dispositif identifié par l'identifiant secondaire, ladite notification comprenant l'identifiant principal et un authentifiant attendu ;
- une réception (G3) par le serveur applicatif d'une demande d'authentification en provenance du dispositif, ladite demande comprenant l'identifiant principal et un authentifiant extraits de la notification, ledit dispositif étant authentifié par le serveur applicatif au moyen dudit identifiant principal en association avec ledit identifiant secondaire lorsque l'authentifiant reçu correspond à l'authentifiant attendu.

7. Procédé d'authentification selon la revendication 6, dans lequel l'identifiant secondaire compris dans le message de signalisation est déchiffré au moyen d'une clé partagée avec le dispositif.

8. Procédé d'authentification selon la revendication 6, dans lequel l'identifiant principal et l'authentifiant compris dans la notification sont chiffrés au moyen d'une clé partagée avec le dispositif.

9. Procédé d'authentification selon la revendication 7 ou 8, dans lequel la clé est déterminée par le serveur applicatif à partir d'une adresse de contact associée à l'application et d'un identifiant de l'application.

10. Dispositif utilisateur (10, 11, 100) comprenant :
- un module de communication (106) avec un serveur de notification (40), agencé pour obtenir un identifiant, dit identifiant secondaire, et pour recevoir des notifications relatives à l'application adressées au dispositif identifié par l'identifiant secondaire :
- un module de signalisation (105), agencé pour envoyer un message de signalisation comprenant un identifiant secondaire porté par une charge utile du message et un identifiant, dit identifiant principal, associé au dispositif par l'intermédiaire d'un module de sécurité (107), dans un entête du message en tant qu'adresse origine du message ;
- un module d'authentification (104), agencé pour extraire d'une notification relative à l'application reçue en mode poussé l'identifiant principal et un authentifiant et pour envoyer à un serveur applicatif (30) une demande d'authentification, ladite demande comprenant l'identifiant principal et l'authentifiant reçus extraits de la notification, ledit dispositif étant authentifié par le serveur applicatif au moyen dudit identifiant principal en association avec ledit identifiant secondaire.

11. Serveur mettant en œuvre une application, dit serveur applicatif (30), ledit serveur comprenant :
- un module d'authentification (303), agencé pour obtenir une demande d'enregistrement d'un dispositif utilisateur (10, 11) au moyen d'un identifiant principal et d'un identifiant secondaire, obtenus à partir d'un message de signalisation envoyé par le dispositif identifié par ledit identifiant principal, associé au dispositif par l'intermédiaire d'un module de sécurité, ledit message comprenant l'identifiant principal dans un entête du message en tant qu'adresse origine du message et l'identifiant secondaire porté par une charge utile du message, obtenu par le dispositif pour recevoir des notifications relatives à l'application, et pour générer un authentifiant pour ledit dispositif :
- un module de commande (304), agencé pour commander un envoi d'une notification relative à l'application en mode poussé, adressée au dispositif identifié par l'identifiant secondaire, ladite notification comprenant l'identifiant principal et un authentifiant attendu ;
ledit module d'authentification étant en outre agencé pour recevoir en provenance du dispositif ayant demandé à être enregistré une demande d'authentification, ladite demande comprenant l'identifiant principal et un authentifiant extraits de la notification, ledit dispositif étant authentifié par le serveur applicatif au moyen dudit identifiant principal en association avec ledit identifiant secondaire lorsque l'authentifiant reçu correspond à l'authentifiant attendu.

12. Programme pour un dispositif utilisateur, comprenant des instructions de code de programme destinées à commander l'exécution de celles des étapes du procédé d'authentification selon l'une des revendications 1 à 5 mises en œuvre par le dispositif, lorsque ledit programme est exécuté par ledit dispositif.

13. Support d'enregistrement lisible par un dispositif utilisateur sur lequel est enregistré le programme selon la revendication 12.

14. Programme pour un serveur applicatif, comprenant des instructions de code de programme destinées à commander l'exécution du procédé d'authentification selon l'une des revendications 6 à 9, lorsque ledit programme est exécuté par ledit serveur.

15. Support d'enregistrement lisible par un serveur applicatif sur lequel est enregistré le programme selon la revendication 14.

## Patentansprüche

1. Verfahren zur Authentifizierung einer Benutzervorrichtung (10, 11) bei einem Server, der eine Anwendung ausführt, Anwendungsserver (30) genannt, wobei das Verfahren umfasst:
- Erhalten (E2) einer Kennung, sekundäre Kennung genannt, durch die Vorrichtung, die es der Vorrichtung ermöglicht, Mitteilungen bezüglich der Anwendung zu empfangen:
- Senden (E3) einer Signalisierungsnachricht, die die Hauptkennung in einem Kopf der Nachricht als Ursprungsadresse der Nachricht und die durch eine Nutzinformation getragene sekundäre Kennung umfasst, durch die Vorrichtung, die mit einer Kennung bezeichnet ist, Hauptkennung genannt, die durch ein Sicherheitsmodul mit der Vorrichtung verknüpft ist;
- Empfangen (E4) einer Mitteilung bezüglich der Anwendung, die an die mit der sekundären Kennung bezeichnete Vorrichtung adressiert ist, im Push-Modus durch die Vorrichtung, wobei die Mitteilung die Hauptkennung und einen Authentifikator umfasst und deren Sendung vom Anwendungsserver befohlen wurde;
- Senden (E5) einer Authentifizierungsanfrage von der Vorrichtung an den Anwendungsserver, wobei die Anfrage die Hauptkennung und Authentifikator umfasst, die aus der Mitteilung extrahiert wurden, wobei die Vorrichtung vom Anwendungsserver anhand der Hauptkennung in Verbindung mit der sogenannten sekundären Kennung authentifiziert wird.

2. Verfahren zur Authentifizierung nach Anspruch 1, wobei die sekundäre Kennung, die in der Signalisierungsnachricht umfasst ist, anhand eines mit dem Anwendungsserver gemeinsam genutzten Schlüssels verschlüsselt wird.

3. Verfahren zur Authentifizierung nach Anspruch 1, wobei die Hauptkennung und der Authentifikator, die in der Mitteilung umfasst sind, anhand eines mit dem Anwendungsserver gemeinsam genutzten Schlüssels entschlüsselt werden.

4. Verfahren zur Authentifizierung nach Anspruch 2 oder 3, wobei der Schlüssel von der Vorrichtung auf der Grundlage einer mit der Anwendung verknüpften Kontaktadresse und einer Anwendungskennung bestimmt wird.

5. Verfahren zur Authentifizierung nach Anspruch 1, wobei die Vorrichtung die sekundäre Kennung verlangt, indem sie eine Anwendungskennung bereitstellt.

6. Verfahren zur Authentifizierung einer Benutzervorrichtung (10, 11) bei einem Server, der eine Anwendung ausführt, Anwendungsserver (30) genannt, wobei das Verfahren umfasst:
- Erhalten (G1) einer Anfrage zur Registrierung der Vorrichtung durch den Anwendungsserver anhand einer Hauptkennung und einer sekundären Kennung, die auf der Grundlage einer Signalisierungsnachricht erhalten werden, die von der Vorrichtung gesendet wird, die mit der durch ein Sicherheitsmodul mit der Vorrichtung verknüpften Hauptkennung bezeichnet ist, wobei die Nachricht die Hauptkennung in einem Kopf der Nachricht als Ursprungsadresse der Nachricht und die durch eine Nutzinformation der Nachricht getragene sekundäre Kennung umfasst, die von der Vorrichtung erhalten wird, um Mitteilungen bezüglich der Anwendung zu empfangen:
- Steuern (G2) einer im Push-Modus erfolgenden Sendung einer Mitteilung bezüglich der Anwendung durch den Anwendungsserver, die an die mit der sekundären Kennung bezeichneten Vorrichtung adressiert ist, wobei die Mitteilung die Hauptkennung und einen erwarteten Authentifikator umfasst;
- Empfangen (G3) einer Authentifizierungsanfrage von der Vorrichtung durch den Server, wobei die Anfrage die Hauptkennung und einen Authentifikator umfasst, die aus der Mitteilung extrahiert werden, wobei die Vorrichtung durch den Anwendungsserver anhand der Hauptkennung in Verbindung mit der sekundären Kennung authentifiziert wird, wenn der empfangene Authentifikator dem erwarteten Authentifikator entspricht.

7. Verfahren zur Authentifizierung nach Anspruch 6, wobei die sekundäre Kennung, die in der Signalisierungsnachricht umfasst ist, mittels eines Schlüssels entschlüsselt wird, der mit der Vorrichtung gemeinsam genutzt wird.

8. Verfahren zur Authentifizierung nach Anspruch 6, wobei die Hauptkennung und der Authentifikator, die in der Mitteilung enthalten sind, anhand eines Schlüssels verschlüsselt werden, der mit der Vorrichtung gemeinsam genutzt wird.

9. Verfahren zur Authentifizierung nach Anspruch 7 oder 8, wobei der Schlüssel durch den Anwendungsserver auf der Grundlage einer Kontaktadresse bestimmt wird, die mit der Anwendung und einer Anwendungskennung verknüpft ist.

10. Benutzervorrichtung (10, 11, 100), umfassend:
- ein Kommunikationsmodul (106) mit einem Mitteilungsserver (40), das dazu eingerichtet ist, eine Kennung, sekundäre Kennung genannt, zu erhalten und Mitteilungen bezüglich der Anwendung zu empfangen, die an die durch die sekundäre Kennung bezeichnete Vorrichtung adressiert sind;
- ein Signalisierungsmodul (105), das dazu eingerichtet ist, eine Signalisierungsnachricht zu senden, die eine von einer Nutzinformation der Nachricht getragene sekundäre Kennung und eine Kennung, Hauptkennung genannt, die mittels eines Sicherheitsmoduls (107) mit der Vorrichtung verknüpft ist, in einem Kopf der Nachricht als Ursprungsadresse der Nachricht umfasst;
- ein Authentifizierungsmodul (104), das dazu eingerichtet ist, aus einer im Push-Modus erhaltenen Mitteilung bezüglich der Anwendung die Hauptkennung und einen Authentifikator zu extrahieren und eine Authentifizierungsanfrage an einen Anwendungsserver (30) zu senden, wobei die Anfrage die empfangene Hauptkennung bzw. den Authentifikator, die aus der Mitteilung extrahiert wurden, umfasst, wobei die Vorrichtung vom Anwendungsserver mittels der Hauptkennung in Verbindung mit der sekundären Kennung authentifiziert wird.

11. Server, der eine Anwendung ausführt, Anwendungsserver (30) genannt, wobei der Server umfasst:
- ein Authentifizierungsmodul (303), das dazu eingerichtet ist, eine Anfrage zur Registrierung einer Benutzervorrichtung (10, 11) anhand einer Hauptkennung und einer sekundären Kennung zu erhalten, die auf der Grundlage einer Signalisierungsnachricht erhalten wurden, die von der Vorrichtung gesendet wurde, die durch die mit der Vorrichtung durch ein Sicherheitsmodul verknüpfte Hauptkennung bezeichnet ist, wobei die Nachricht die Hauptkennung in einem Kopf der Nachricht als Ursprungsadresse der Nachricht und die durch die Nutzinformation der Nachricht getragene sekundäre Kennung umfasst, die von der Vorrichtung zum Empfangen von Mitteilungen bezüglich der Anwendung und zum Erzeugen eines Authentifikators für die Vorrichtung erhalten wurden:
- ein Steuermodul (304), das dazu eingerichtet ist, eine Sendung einer Mitteilung bezüglich der Anwendung im Push-Modus zu steuern, die an die durch die sekundäre Kennung bezeichnete Vorrichtung adressiert ist, wobei die Mitteilung die Hauptkennung und einen erwarteten Authentifikator enthält;
wobei das Authentifizierungsmodul außerdem dazu eingerichtet ist, von der Vorrichtung, die angefragt hat, um sich registrieren zu lassen, eine Authentifizierungsanfrage zu empfangen, wobei die Anfrage die Hauptkennung und einen Authentifikator umfasst, die aus der Mitteilung extrahiert wurden, wobei die Vorrichtung vom Anwendungsserver anhand der Hauptkennung in Verbindung mit der sekundären Kennung authentifiziert wird, wenn der empfangene Authentifikator dem erwarteten Authentifikator entspricht.

12. Programm für eine Benutzervorrichtung, umfassend Codeanweisungen des Programms, die dazu bestimmt sind, die Ausführung derjenigen der Schritte des Verfahrens zur Authentifizierung nach einem der Ansprüche 1 bis 5 zu steuern, die durch die Vorrichtung umgesetzt werden, wenn das Programm von der Vorrichtung ausgeführt wird.

13. Speichermedium, das durch die Benutzervorrichtung, auf dem das Programm nach Anspruch 12 gespeichert ist, lesbar ist.

14. Programm für einen Anwendungsserver, umfassend Codeanweisungen des Programms, die dazu bestimmt sind, die Ausführung des Verfahrens zur Authentifizierung nach einem der Ansprüche 6 bis 9 zu steuern, wenn das Programm vom Server ausgeführt wird

15. Speichermedium, das durch einen Anwendungsserver, auf dem das Programm nach Anspruch 14 gespeichert ist, lesbar ist.

## Claims

1. Method for authenticating a user device (10, 11) with a server implementing an application, called application server (30), said method comprising:
- the device obtaining (E2) an identifier, called secondary identifier, allowing the device to receive notifications in relation to the application;
- the device, identified by an identifier, called main identifier, associated with the device by way of a security module, sending (E3) a signalling message comprising the main identifier in a header of the message as original address of the message and the secondary identifier carried by a payload of the message;
- said device receiving (E4) a notification in relation to the application addressed to the device identified by the secondary identifier in push mode, said notification comprising the main identifier and an authenticator, and the sending of which was commanded by the application server;
- said device sending (E5) an authentication request to the application server, said request comprising the main identifier and the authenticator that are extracted from the notification, said device being authenticated by the application server by way of said main identifier in association with said secondary identifier.

2. Authentication method according to Claim 1, wherein the secondary identifier contained in the signalling message is encrypted by way of a key shared with the application server.

3. Authentication method according to Claim 1, wherein the main identifier and the authenticator contained in the notification are decrypted by way of a key shared with the application server.

4. Authentication method according to Claim 2 or 3, wherein the key is determined by the device based on a contact address associated with the application and on an identifier of the application.

5. Authentication method according to Claim 1, wherein the device requests the secondary identifier by providing an identifier of the application.

6. Method for authenticating a user device (10, 11) with a server implementing an application, called application server (30), said method comprising:
- the application server obtaining (G1) a request to register said device by way of a main identifier and of a secondary identifier, which are obtained from a signalling message sent by the device identified by said main identifier, associated with the device by way of a security module, said message comprising the main identifier in a header of the message as original address of the message and the secondary identifier carried by a payload of the message, obtained by the device in order to receive notifications in relation to the application;
- the application server commanding (G2) sending, in push mode, of a notification in relation to the application addressed to the device identified by the secondary identifier, said notification comprising the main identifier and an expected authenticator;
- the application server receiving (G3) an authentication request from the device, said request comprising the main identifier and an authenticator that are extracted from the notification, said device being authenticated by the application server by way of said main identifier in association with said secondary identifier when the received authenticator corresponds to the expected authenticator.

7. Authentication method according to Claim 6, wherein the secondary identifier contained in the signalling message is decrypted by way of a key shared with the device.

8. Authentication method according to Claim 6, wherein the main identifier and the authenticator contained in the notification are encrypted by way of a key shared with the device.

9. Authentication method according to Claim 7 or 8, wherein the key is determined by the application server based on a contact address associated with the application and on an identifier of the application.

10. User device (10, 11, 100) comprising:
- a communication module (106) for communicating with a notification server (40), designed to obtain an identifier, called secondary identifier, and to receive notifications in relation to the application that are addressed to the device identified by the secondary identifier;
- a signalling module (105), designed to send a signalling message comprising a secondary identifier carried by a payload of the message and an identifier, called main identifier, associated with the device by way of a security module (107), in a header of the message as original address of the message;
- an authentication module (104), designed to extract the main identifier and an authenticator from a notification in relation to the application received in push mode and to send an authentication request to an application server (30), said request comprising the received main identifier and the received authenticator that are extracted from the notification, said device being authenticated by the application server by way of said main identifier in association with said secondary identifier.

11. Server implementing an application, called application server (30), said server comprising:
- an authentication module (303), designed to obtain a request to register a user device (10, 11) by way of a main identifier and of a secondary identifier, which are obtained from a signalling message sent by the device identified by said main identifier, associated with the device by way of a security module, said message comprising the main identifier in a header of the message as original address of the message and the secondary identifier carried by a payload of the message, obtained by the device in order to receive notifications in relation to the application, and in order to generate an authenticator for said device:
- a command module (304), designed to command the sending of a notification in relation to the application in push mode, addressed to the device identified by the secondary identifier, said notification comprising the main identifier and an expected authenticator;
said authentication module furthermore being designed to receive an authentication request from the device that requested to be registered, said request comprising the main identifier and an authenticator that are extracted from the notification, said device being authenticated by the application server by way of said main identifier in association with said secondary identifier when the received authenticator corresponds to the expected authenticator.

12. Program for a user device, comprising program code instructions intended to command the execution of those steps of the authentication method according to one of Claims 1 to 5 that are implemented by the device when said program is executed by said device.

13. Recording medium able to be read by a user device and on which the program according to Claim 12 is recorded.

14. Program for an application server, comprising program code instructions intended to command the execution of the authentication method according to one of Claims 6 to 9 when said program is executed by said server.

15. Recording medium able to be read by an application server and on which the program according to Claim 14 is recorded.
